# EUROPEAN PATENT APPLICATION

(11) **EP 2 236 688 A2**
(43) Date of publication of application: **06.10.2010**
(21) Application number: 10386006.0
(22) Date of filing: 10.03.2010
(51) Int. Cl.: E04C 2/04, E04C 2/06, E04C 2/288

(54) **Complex structural element**

(30) Priority: 03.04.2009 GR 20090100198
(71) Applicant: Kapsalakis, Konstantinos, 145 65 Ag. Stefanos Attikis (GR)
(72) Inventor: Kapsalakis, Konstantinos, 145 65 Ag. Stefanos Attikis (GR)

(57) **Abstract**

The practical property of the complex constructive element which is also our object of the invention lies in the fact that a constructive element that renders during its use two external shells with heat and sound insulation properties interveners within its center of its body by the use of enlarged in heat polysterine where we use them as two constructive elements in the external bearing masonry of the building, achieving with that manner the complex use of this that is the full heat and sound insulation of the external bearing masonry and the throwing in of the armored concrete (coat) to the created gap between these two shells and so achieving the maximum earthquake resistance of the building-facility since there are in work ALL

## Description

### 1. DESCRIPTION AND REVEALING THE INVENTION

Constituted by pumice cement brick, ecological, light in weight, strong, earthquake resistance.
**A)** Composition of its materials: Pumice of special sorting and granulometry 0,03-0,08 mm origin by the volcanic island Nisirou (Giali Nisiros), enriched by fibers of propylene and inorganic aluminum accessory mineral. And by adding the special qualifications of the special cement type but also by the method of the dry contraction that gives us a most powerful light in weight heat and sound proof lithosoma (pumice cement brick) of complex structure and built.
**B)** Characteristic properties of the complex constructive.

Basically the new constructive element is composed by two external shells, similar made by pumice of dry contraction, length of 0,50 cm, height of 0,30 cm and width of 0,09 cm and thickness of its walls 2,5 cm. At the middle of these two above shells there are embody interleaved heat and sound proof materials of 0,04 cm thickness constituted by polyurethane-polysterine swelled by heat and dimensions of each at length 0,46 cm and at height 0,30 cm. The above two shells are combined between them by two pads with dimensions 0,10 cm X 0,12 cm X 0,04 cm all along of both these shells. With the same manner there is production of a lithosoma of complex shape and use therefore as self-sufficient constructive element of dimensions 0,50 X 0,30 X 0,30 cm that gives as an one-shell bearing external masonry according also with the European directives and under the new Greek earthquake resistance regulation which abolishes the usual, up to date, double brick construction to the bearing external masonry with the EXTRA cost of heat insulator, DOW plates etc., to the external surfaces of the double brick masonry.

By joining the two external shells a gap is created between these two external shells of the constructive element 0,50 X 0,12 X 0,30 cm and which gap would be used for throwing in ferro concrete so to continue the flow of the construction and according to the relative static design of the building and simultaneously to the complex construction of the concrete with coats, lattices in the middle of the above constructive element with the embodied encircling posts (columns) per 4 meters length, concrete wall beams, girders for hosting coating plates, overhangs etc. By the system of construction and throwing in concrete (COSTUME) to indefinite time.

This above mentioned clever and bright idea of Konstantinos Kapsalakis for differentiation and from the beginning formation of the old after 30 years and up to date used simple cement block as a lithosoma, a constructive material by inactive materials (grit, water and common black cement) with small dimensions 0,27 X 0,17 X 0,15 and with special weight 10 kgs and working for 45 consecutive years in foreign countries and in Greece in the constructive, building major constructions and in public-municipal labors on his behalf he gave FOR FULFILLING in LABOR and as a TOOL the charitable in comprehension and creation of this complex constructive lithosoma that would bring the revolution in constructive and building individual and public labor and as an example referring up to date the commonly used simple constructive lithosoma (concrete block) with so many up to date negative disadvantages.

### 2. REPORT VOLUME OF PREVIOUS TECHNIQUE AMONG WITH HIGHLIGHTING DISADVANTAGES WHICH THIS INVENTION IS GOING TO FIX

Large special weight of 18 kgr/piece dimensions 0,27 x 0,17 x 0,15 cm. Thus 22 approximately pieces to 1 s.m. of construction. With having problems to transportation, storage and disposal of inactive materials of this sand gravel, black cement etc. It needs platform for outpouring in iron molds of the material of sand gravel, for two-three days wetting with water in order for its mass to stiffen and turns for perfect wetting and stiffen the lithosoma, transport with iron carts in places of their accumulation, after that loading to track cars and transport them to work site-construction etc, unload and transport to the place of its built. In contrast, the dimensions of the above constructive element are 0,50 x 0,3 x 0,3 cm and has weight of 8 kgr and covers 6 elements per s.m. and as greater advantage that it comes to the construction site within pallets ready for its use, near by the technicians for easy and rapid built and with the simultaneously outpouring the reinforced concrete of all the construction according to the static design and under the supervision of Civil Engineer of the work.

### 3. EXAMPLE OF EVALUATING THE COMPLEX CONSTRUCTIVE ELEMENTTO BUILDING CONSTRUCTIONS

Today BUILDING with this complex constructive element, we are able to construct for example the ground floor of a building of 200 s.m. with simultaneously construction and throwing in reinforced concrete, thus a building 20 x 10 x 5 m. Height within 40 working days with combined prefabrication frames bases of building, drainage, excavation columns bases, bases and sandal beams, receptors of internal and external masonry with being more important the throwing in of concrete for cleaning bases before the above labor. Throwing in concrete wall beams coats, encircling throwing in to columns and posts and wall beams of the receptors post of the roof or the coating plate of the building. All these within 40 days. And "whoever has the guts, will and mood" let him try this project. The first project, this would be tough. The rest constructions would be simply routine.

### 4. REPORT UP TO DATE USED CONSTRUCTIVE MATERIALS AND THEIR COST.

Brick constructions are the usual material that constantly used in the building either to internal areas for ordering separates with alone brick construction or the external walls of double construction (two rows of bricks) and coating of the external views and the gap between the two brick constructions with leaves of sound-heat insulating plates of enlarged polysterine DOW etc, insulating materials that burdens the building with double cost of construction (two bricks) and great cost loss by the overused quantity of insulating materials as used even to the surface of columns, posts and rest constructive surfaces of the building regardless the volume and the surface that need to insulate so to reach up to the best possible restriction of heat-sound insulation of the building (of every nature). As for the masonry it is well known the great cost of its construction.

### 5. REPORT OF THE VOLUME OF THE USEFULNESS AND THE ADVANTAGES OF THE NEW COMPLEX CONSTRUCTIVE ELEMENT

I have created a most clever, useful, prototype and with light weight handy revolutionary constructive element that would capsize all up to today data of the external masonry and according to logic of understanding domino it would capsize many constructive systems to the constructive labors. It is capsized to the better the up to today method of external masonry and especially to seismic areas as well as areas of extreme weather alterations, high thermal areas with 40-55 degrees Celsius during the day and with 10 up to -10 degrees Celsius during the night, such as Africa (north- south), Arabia, Scandinavia and rest northern countries.

Also, in very noisy areas such as great cities with many factories, trains and rest causes of great noise pollution, the modern constructive element gives us an one shell external masonry fully insulated where there is no demand of double build of brickwork and enforced with interim additional sound insulation and simultaneously throwing in to the middle gap between the two external shells 0,12 cm thick enforced concrete with grid wall beams in relation with the armory of the encircled posts (columns) of posts wall beams, receptors of the coating plates (costume) all these in incredibly short time.

### 6. REPORT FOR CONSTRUCTIVE ELEMENT OF INTERNAL SEPARATORS

For the internal separators of the building mainly constructions in general I have predicted a constructive element similar to the above planning of one-shell elements with the same constitution with more against sound permeability almost reaching up to zero in combinations with the construction of three transverse concrete wall beams. This would be fulfilled with anchorages of this with iron armor of the system of encircled enforced concrete (columns, posts etc) of the building.
DIMENSION OF THE CONSTRUCTIVE SEPARATOR ELEMENT OF THE INTERNALAREAS HAS LENGTH 0,40, WIDTH 0,12 AND HEIGHT 0,30. SPECIAL WEIGHT OF THIS 4 kg. Its construction is every element with crisscross order, with binding the header with epoxide resin in the roof of the each area. By the use of this constructive element it is given great facilitation to the several technical constructive workshops, to plumbers, to electricians, to heat carpenters, to cabinet makers or kitchen carpenters, to decorators, etc technicians in order to use instead of the injurious HAMMER AND CHISEL that so many damage creates during its use to internal and external masonry when the above workers work with them for opening canals lines of their subject. IT IS POSSIBLE, WITH MUCH MORE EASILY to manipulate an electrical cutter (router) where it is friendly with pumice rock of the constructive element where in no time they would open their line canals they desire without surprises and without costs and without damage to the walls of their labor area.

### 7. BENEFITS OF THE INVENTION

Using the system of external bearing masonry (DIRECTIVE of E.C. under the number 6 and according to directives of the new Greek earthquake resistance organization) and with the complex constructive building element where we have the way and the facility to construct buildings of irrelevant volume and width and up to four floors height, that is three floors and one coating roof. That means there is capability to build ground floor residence, country villa, little houses, villages, hospitals, schools, warehouses, factories, barracks, restoration of earthquake victims and refuges origin by belligerent countries (Gaza, Palestine, Irak, Afghanistan etc), refuges camps where very miserable people naked, hungry and panic one are emergently seeking for a roof in order to find a shelter for their little kids and the older relatives, so to diminish the terror and the pain. In these circumstances as well as other more extreme that we do not mention here it is absolute useful and practical, directly, to build in massive scale where great Greek constructive firms as well as foreign ones would hurry up and with an easy complex way of construction in industrial width of the above constructive mentioned elements and the coordination of the workshops with specialized civil engineers and experienced gaffers as well as experienced Greek contractors to formulate tens and hundreds of workshops using the native population with workers who would be plenty for every manual labor and apart the fact that today without cause people are miserable they would hie and participate to the labor force of the constructive firms, primary in order to collect money that so much are needed, the poor ones and would be grateful for that. By a personal experience I say, since I have worked in Lebanon for two years where I was supervising of a great French technical firm from Nice of the French Riviera and I know who wonderful are the people down there, and the contractors and manufacturers would get a lot of help by the native people who would work there.

Today BY CONSTRUCTING with this complex constructive element we are able to construct for example a ground floor building of 200 s.m. with the simultaneously building and throwing in enforced concrete, thus a building of 20 x 10 = 200 s.m. within 40 working days with the combined prefabrication frames bases of building, drainage, excavation columns bases, bases and sandal beams, receptors of internal and external masonry with being more important the throwing in of concrete for cleaning bases before the above labor. Throwing in concrete wall beams coats, encircling throwing in to columns and posts and wall beams of the receptors post of the roof or the coating plate of the building. All these within 40 days. And "whoever has the guts, will and mood" let him try this project. The first project, this would be tough. The rest constructions would be simply routine.

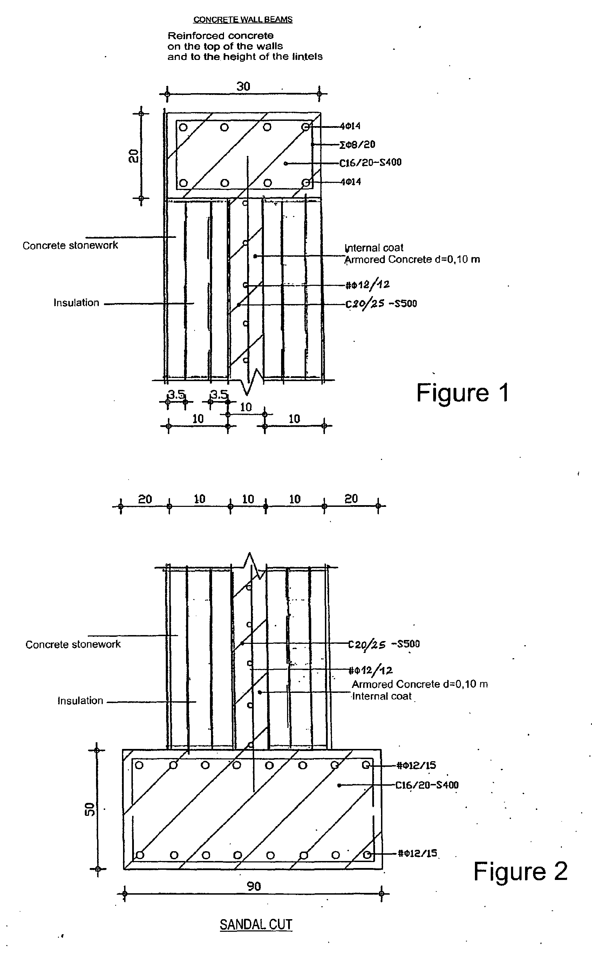

## Claims

1. .Complex constructive element by pumice of special qualifications, polypropylene fibers and inorganic aluminum accessory minerals **characterized by** the special formations that allow the height, length and width order for constructive buildings.

2. . Complex constructive element according to 1 st claim where polypropylene fibers are placed within the mixture of the constructive element.

3. . Complex constructive element according to 1 st claim where the constructive element is composed by two shells with intermediate intervention by polysterine or polyourethane enlarged by heat.

4. . Complex constructive element according to 3rd claim where the two shells are combined between by two pads of dimensions 0,10 x 0,12 x 0,04 cm leaving gaps all around for placing coat enriched with concrete.

5. . Method of complex construction with bearing masonry that uses the constructive elements of 1 st to 5th claims.

6. . Method of complex construction according to 6th claim during of which the construction succeeds double masonry WITH ONE constructive element that extends to height, length and width. According to the static design of the building and with simultaneously throwing in reinforced concrete of the building (posts, encircling columns) wall beams, posts and coated plate with the cantilevers and the rest constructive data of the reinforced concrete.
